# EUROPÄISCHE PATENTSCHRIFT

(11) **EP 0 546 269 B1**
(45) Veröffentlichungstag und Bekanntmachung des Hinweises auf die Patenterteilung: **10.05.1995**
(21) Anmeldenummer: 92116808.4
(22) Anmeldetag: 01.10.1992
(51) Int. Cl.: C09D 17/00, C09D 5/44, C08G 59/04, C08G 59/14

(54) **Pigmentzubereitungen**
Pigment preparations
Préparations pigmentaires

(30) Priorität: 12.10.1991 DE 4133853
(43) Veröffentlichungstag der Anmeldung: 16.06.1993
(73) Patentinhaber: BASF Lacke + Farben AG, 48165 Münster-Hiltrup (DE)
(72) Erfinder: Huemke, Klaus, Dr., W-6701 Friedelsheim (DE); Hoffmann, Gerhard, Dr., W-6701 Otterstadt (DE); Faul, Dieter, Dr., W-6702 Bad Duerkheim (DE); Heimann, Ulrich, Dr., W-4400 Münster (DE); Ruehl, Dieter, Dr., W-4400 Münster (DE)

(56) Entgegenhaltungen:
- EP-A- 0 251 772
- EP-A- 0 336 599
- DE-A- 3 518 770
- US-A- 3 793 278

## Beschreibung

Die vorliegende Erfindung betrifft Pigmentzubereitungen, die als wesentliche Komponenten
I) Kunstharze, erhältlich durch Umsetzen von
   A) epoxidgruppen-tragenden Harzen auf der Basis von
      a₁) Polyepoxiden auf der Basis mehrwertiger Phenole,
      a₂) Polyoxyalkylenpolyolen, Polyoxyalkylenpolyepoxiden oder einer Mischung dieser Verbindungen,
      a₃) mehrwertigen Phenolen,
      a₄) gegenüber Epoxiden monofunktionell reagierenden phenolischen Verbindungen und
   B) einem Sulfid und
II) ein Pigmentpulver.
enthalten.

Weiterhin betrifft die Erfindung ein Verfahren zur Herstellung dieser Pigmentzubereitungen.Ferner betrifft die Erfindung die Verwendung der Pigmentzubereitungen in Elektrotauchlackierbädern.

Für das kathodische Elektrotauchlackierverfahren werden üblicherweise Harzmischungen aus einem Bindemittelharz, einer Vernetzerkomponente und einer Pigmentzubereitung, die aus einem Harz mit oberflächenaktiven Eigenschaften, einem sogenannten Reibharz und einem Pigmentpulver hergestellt wird, verwendet.

Ammonium-, phosphonium- und/oder ammoniumgruppentragende Bindemittelharze auf der Basis von Polyepoxiden auf der Basis mehrwertiger Phenole, Polyoxyalkylenpolyolen und gegenüber Epoxiden monofunktionell reagierenden phenolischen Verbindungen sind aus der EP-B1-241 476 bekannt. Es wird empfohlen, diese Bindemittelharze auch als Reibharze in Pigmentzubereitungen einzusetzen.

Entweder koagulieren diese Bindemittelharze jedoch, wenn sie mit dem Pigmentpulver vermahlen werden oder die Pigmentzubereitungen aus diesen Harzen bilden einen Bodensatz im Elektrotauchlackierbad. Darüber hinaus haben Lacke, die derartige Pigmentzubereitungen enthalten ein unbefriedigendes Eigenschaftsspektrum.

Der vorliegenden Erfindung lagen daher lösungsmittelarme Pigmentpasten als Aufgabe zugrunde, die sich durch ein gutes Gesamtspektrum an Eigenschaften, insbesondere eine geringe Neigung zur Vergilbung und gute Verarbeitbarkeit auszeichnen.

Daher wurden die eingangs definierten Pigmentzubereitungen gefunden, die als wesentliche Komponente (I) Kunstharze und als wesentliche Komponente (II) ein Pigmentpulver enthalten. Die Kunstharze (I) sind erhältlich durch Umsetzen von einem epoxidgruppen-tragenden Harz (Komponenten (A)) mit einem Sulfid (Komponente (B)) in Gegenwart einer Säure.

Als Komponente (A) kommen epoxidgruppen-tragende Harze in Betracht, die in Mengen von etwa 60 bis etwa 95 Gew.-%, besonders von etwa 75 bis 95 Gew.-%, bezogen auf das Gesamtgewicht der Kunstharze, in den Kunstharzen enthalten sein können. Ihre mittleren Molekulargewichte M̅_{w} können von ca. 200 bis ca. 20 000, vorzugsweise von ca. 500 bis ca. 5000 liegen. Im allgemeinen haben die epoxidgruppen-tragenden Harze Epoxidequivalentgewicht EEW von 800 bis 2500, speziell von 1000 bis 1500.

Bei den epoxidgruppen-tragenden Harzen handelt es sich um Polyepoxide auf der Basis mehrwertiger Phenole, wobei diese Grundbausteine mit Polyoxyalkylenpolyolen, Polyoxyalkylenpolyepoxiden oder deren Mischungen gemischt bzw. umgesetzt werden. Zum Einstellen der gewünschten Epoxidequivalentgewichte werden die Mischungen bzw. Umsetzungsprodukte aus den Grundbausteinen und der Polyoxyalkylenkomponente mit mehrwertigen Phenolen und mit gegenüber Epoxiden monofunktionell reagierenden phenolischen Verbindungen zur Reaktion gebracht.

Die Polyepoxide auf der Basis mehrwertiger Phenole (Komponente (a₁)) sind im allgemeinen in Mengen von 10 bis 70 Gew.-%, vorzugsweise von 30 bis 70 Gew.-%, bezogen auf das Gesamtgewicht der Komponente (A), im epoxidgruppen-tragenden Harz enthalten. Diese Grundbausteine weisen im allgemeinen Epoxidequivalentgewichte von ca. 175 bis ca. 1000, vorzugsweise von etwa 180 bis etwa 600 auf. Sie lassen sich beispielsweise dadurch erhalten, daß man mehrwertige Phenole mit Epihalogenhydrin, vorzugsweise Epichlorhydrin umsetzt. Als mehrwertige Phenole sind beispielsweise zu nennen: Resorcin, Hydrochinon, 2,2-Bis-(4-hydroxyphenyl)propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4-hydroxyphenyl)-1,1-ethan, Bis-(4-hydroxyphenyl)-1,1'-isobutan, Bis-(4-hydroxy-t-butylphenyl)-2,2-propan, Bis-(2-hydroxynaphthyl)methan, 1,5-Dihydroxynaphthalin, Tris-(4-hydroxyphenyl)methan, Bis-(4-hydroxyphenyl)- 1,1'-ether. Bishenol A ist hierbei das bevorzugte mehrwertige Phenol.

Die in Betracht kommenden Polyoxyalkylenpolyole und Polyoxyalkylenpolyepoxide können linear oder verzweigt sein. Geeignet sind sowohl Polyoxyalkylenpolyole und Polyoxyalkylenpolyepoxide, die aus gleichen Oxyalkylengruppen aufgebaut sind, als auch solche, die unterschiedliche Oxyalkylengruppen enthalten. Bevorzugt werden Polyoxyalkylenpolyole und Polyoxyalkylenpolyepoxide, die im Mittel zwei endständige Hydroxy- bzw. Epoxidgruppen pro Molekül tragen. Polyoxyalkylenpolyepoxide können z.B. durch Umsetzen von Polyoxyalkylenolen mit Epihalogenhydrin erhalten werden. Beispiele geeigneter Polyoxyalkylenole sind Polyoxyethylenglykol, Polyoxypropylenglykol, Polyoxybutylenglykol, Polyoxyhexamethylenglykol, Polyoxynonamethylenglykol, Polyoxydecamethylenglykol, Polyoxyethylenpropylenglykol. Bevorzugt werden Polyoxyalkylenpolyepoxide als Komponente (a₂) eingesetzt. Die für die Herstellung der erfindungsgemäßen Pigmentzubereitungen bevorzugt eingesetzten Polyoxyalkylenpolyepoxide sind die Diglycidylether von Polyoxyethylenglykol, Polyoxypropylenglykol und Polyoxybutylenglykol. Es können aber auch Mischungen verschiedener Polyoxyalkylenpolyole und Polyoxyalkylenpolyepoxide eingesetzt werden.

Die mittleren Molekulargewichte M̅_{w} dieser Polyoxyalkylenpolyole und Polyoxyalkylenpolyepoxide liegen in der Regel zwischen 200 und 20 000, vorzugsweise von 250 bis 5000, wobei die jeweiligen Hydroxy- bzw. Epoxidequivalentgewichte im allgemeinen zwischen 150 und 5000, vorzugsweise von 200 bis 2500 betragen. In der Regel enthält die Komponente (A) 5 bis 50 Gew.-%, vorzugsweise 10 bis 30 Gew.-%, bezogen auf das Gesamtgewicht des epoxidgruppen-tragenden Harzes, an Polyoxyalkylenpolyolen, Polyoxyalkylenpolyepoxiden oder einer Mischung dieser Verbindungen.

Zum Einstellen des Epoxidequivalentgewichts eignen sich prinzipiell alle vorgenannten mehrwertigen Phenole, jedoch werden Hydrochinon, Resorcin, 1,5-Dihydroxynaphthalin und insbesondere Bisphenol A bevorzugt eingesetzt. Diese mehrwertigen Phenole sind vorzugsweise in Mengen von 10 bis 30 Gew.-%, aber (Komponente (a₃)) auch darüber, im allgemeinen nicht mehr als 50 Gew.-%, oder darunter, bis etwa 5 Gew.-%, jeweils bezogen auf das Gesamtgewicht des epoxidgruppen-tragenden Harzes, in der Komponente (A) enthalten.

Die gegenüber Epoxiden monofunktionell reagierende phenolische Verbindung (Komponente (a₄)) kann ein Phenol soin, das mindestens einen Kernsubstituierten aus der Gruppe der C₁-C₂₀-Alkoxy- und C₁-C₂₀-Alkylrest trägt, wobei die Alkylreste mit einem oder mehreren Sauerstoffatomen unterbrochen sein können. Die Kernsubstituenten können verzweigt oder linear sein, wobei letztere bevorzugt werden. Besonders bevorzugt werden Verbindungen der allgemeinen Formel I 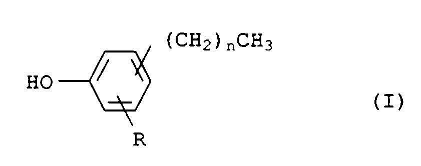
wobei
- R: = H, CH₃, CH₂CH₃ und unabhänging voneinander davon
- n: = 1 bis 20,
ist.

Als besonders günstig haben sich Phenole erwiesen, in denen R = H und n = 8 bis 18 ist. Unter diesen Monoalkylphenolen, deren Alkylsubstituenten vorzugsweise in p-Stellung zur OH-Gruppe stehen, sind insbesondere zu nennen Octylphenol, Nonylphenol, Decylphenol, Undecylphenol, Dodecylphenol und Octadecylphenol. Bevorzugt werden Mischungen aus zwei oder mehreren verschieden phenolischen Verbindungen verwendet. Ganz besonders bevorzugt werden Mischungen aus zwei unterschiedlichen Monoalkylphenolen, die sich in ihrer Alkylkettenlänge n um mindestens 3 Kohlenstoffatome unterscheiden. Beispiele derartiger Mischungen sind Pentylphenol und Decylphenol, Hexylphenol und Nonylphenol, Octylphenol und Dodecylphenol, Nonylphenol und Dodecylphenol, Dodecylphenol und Eicosylphenol, wobei Mischungen aus Nonylphenol und Dodecylphenol bevorzugt werden.

In der Regel enthält die Komponente (A) von 0.5 bis 30 Gew.-%, bevorzugt 0,5 bis 20, vorzugsweise von 5 bis 15 Gew.-%, bezogen auf das Gesamtgewicht der Komponente (A), der gegenüber Epoxiden monofunktionell reagierenden phenolischen Verbindung (a₄)

Verbindungen wie Ethyltriphenylphosphoniumbromid, Triphenylphosphin, Dimethylbenzylamin und Triethylamin, die im allgemeinen in Mengen bis zu 0,5 Gew.-%, vorzugsweise bis zu 0,3 Gew.-%, bezogen auf das Gesamtgewicht der Komponente A, zugegeben werden können, katalysieren die Umsetzung der Komponenten (a₁) bis (a₄) zu den epoxidgruppen-tragenden Harzen (Komponente (A)).

Erfindungsgemäß enthalten die epoxidgruppen-tragenden Harze als Komponente (B) ein Sulfid, worunter auch eine Mischung verschiedener Sulfide zu verstehen ist. Eingesetzt werden können alle Sulfide, die mit Epoxidgruppen reagieren und die bezüglich dieser Reaktion keine störenden Gruppen aufweisen. Zum Beispiel können aliphatische Sulfide, wobei die aliphatischen Reste linear oder verzweigt sein können, gemischte aliphatisch-aromatische Sulfide, aromatische Sulfide, Aralkylsulfide oder cyclische Sulfide verwendet werden. Als Beispiele für diese Sulfide sind zu nennen Diethylsulfid, Dipropylsulfid, Dibutylsulfid, Dihexylsulfid, Ethylphenylsulfid, Diphenylsulfid, Tetramethylensulfid, Pentamethylensulfid, Di(hydroxyethyl)sulfid, Di(hydroxypropylsulfid), Di(hydroxybutyl)sulfid. Bevorzugt werden Dialkylsulfide, deren Alkylreste 2 bis 12 Kohlenstoffatome haben, insbesondere Di(C₂-C₅-alkyl)sulfide. Ganz besonders bevorzugt werden Di(hydroxyalkyl)sulfide mit 2 bis 12 Kohlenstoffatomen pro Hydroxyalkylrest, insbesondere Di(hydroxyethyl)sulfid. In der Regel enthalten die Kunstharze von 5 bis 40 Gew.-%, bevorzugt 5 bis 30, insbesondere 5 bis 15 Gew.-%, bezogen auf das Gesamtgewicht der Kunstharze, an Komponente (B). Diese Menge entspricht 0,5 bis 1,5, insbesondere 0,5 bis 1,0 Sulfidmolekülen pro Epoxidgruppen.

Außer den wesentlichen Komponenten können die Pigmentzubereitungen noch Zusatzstoffe (Komponente (C)) in Mengen von im allgemeinen nicht mehr als 10, insbesondere nicht mehr als 6 Gew.-%, bezogen auf das Gesamtgewicht der Pigmentzubereitungen enthalten. Zu diesen zählen gegenüber Epoxidgruppen inerte Lösungsmittel oder Lösungsmittelgemische wie Glycolether, darunter Propylenglykolphenylether und Propylenglykolmono-methylether. Zu den Zusatzstoffen zählen aber auch geringe Mengen an Polyurethanen und Polyvinylether, die als Verlaufshilfsmittel dienen.

Üblicherweise werden die Sulfide in Anwesenheit von Säuren bei Temperaturen von 50 bis 150°C, gewünschtenfalls in Gegenwart von Zusatzstoffen, mit den epoxidgruppen-tragenden Harzen zu den Kunstharzen (I) umgesetzt.

Dabei kommen alle Säuren in Betracht, die tertiäre Sulfoniumsalze bilden können. Beispiele für diese Säuren sind Salzsäure, Phosphorsäure und Schwefelsäure. Bevorzugt werden organischen Säuren wie Ameisensäure, Milchsäure, Essigsäure, Propionsäure, Buttersäure oder Dimethylolpropionsäure. Dabei wird Milchsäure besonders bevorzugt. Im allgemeinen liegt das molare Verhältnis von Säure zu Sulfid zwischen etwa 0,5 bis etwa 1,2 zu 1, insbesondere zwischen etwa 0,6 bis etwa 1,0 zu 1.

Die Kunstharze (I) lassen sich in Wasser dispergieren. Üblicherweise enthalten die wäßrigen Dispersionen von 1 bis 60 Gew.-%, vorzugsweise 1 bis 30 Gew.-% an Kunstharz.

Das Mengenverhältnis von Kunstharz (I) zu Pigmentpulver (II) hängt im wesentlichen von der Art des Pigments oder der Pigmentmischung sowie deren Korngröße ab. Kunstharz:Pigmentpulvermengenverhältnisse von 0,2:1, vorzugsweise von 0,3:1 sind möglich. Neben einer wäßrigen Dispersion (α) des Kunstharzes, welche im allgemeinen von 10 bis 90 Gew.-%, bevorzugt von 20 bis 80 Gew.-% der Pigmentzubereitungen beträgt und dem Pigmentpulver, das in der Regel von 10 bis 90 Gew.-%, bevorzugt von 20 bis 80 Gew.-% in den Zubereitungen enthalten ist, können in den Pigmentzubereitungen auch noch bis zu 10 Gew.-% an Hilfsstoffen mitverwendet werden. Als Hilfsstoffe (γ) sind beispielsweise zu nennen Füllstoffe, Dispergiermittel, Weichmacher und Entschäumer sowie Pigmentstabilisatoren auf Acrylatbasis.

Gebräuchliche Pigmente (II) sind beispielsweise Eisen- und Bleioxide, Strontiumcarbonat, Ruß, Titandioxid, Talkum, Bariumsulfat, Cadmiumgelb, Cadmiumrot, Chromgelb, Phthalocyaninblau oder metallische Pigmente wie Aluminiumflocken.

Üblicherweise wird die Pigmentzubereitung hergestellt indem man die gewünschte Menge trockenen Pigmentpulvers, das ein Pigment oder eine Mischung verschiedener Pigment enthält, mit der wäßrigen Dispersion des Kunstharzes und falls gewünscht den Hilfsstoffen mischt und anschließend die Mischung solange vermahlt bis die Feststoffpartikel die gewünschte Teilchengröße haben.

Das Zerkleinern der Feststoffpartikel geschieht in der Regel in Kugelmühlen, Sandmühlen, Cowles-Auflösern oder kontinuierlichen Zerreibungseinrichtungen. Nach der Zerkleinerung sollte die Teilchengröße der Feststoffpartikel im Bereich von 10 »m oder kleiner liegen. Feinheiten von 3 »m oder kleiner können durch Vermahlen in Gegenwart von Glas-, Korund-, Keramik- oder Zirkondioxid-Perlen erreicht werden.

Die so erhaltenen Pigmentzubereitungen können Lackbindemitteln beigemischt werden. Dabei kommen besonders solche Bindemittel in Betracht, die mit den Kunstharzen der Pigmentpasten verträglich sind. Zu diesen zählen vor allem wasserdispergierbare Bindemittel auf Epoxidharzbasis, die in Elektrotauchlackierbädern eingesetzt werden können. Üblicherweise liegen die Mengenverhältnisse von Pigmentzubereitungen zu Bindemittel von 0,25 zu 1 bis 1 zu 1. Die Mischungen aus Pigmentzubereitung und Bindemittel können als weitere Bestandteile Vernetzer und Hilfsstoffe enthalten. Die Elektrotauchlackierung erfolgt im allgemeinen nach bekannten Verfahren, wobei alle elektrisch leitende Substrate z.B. Metall wie Stahl, Kupfer oder Aluminium beschichtet werden können. Nach der Beschichtung können die Überzüge bei erhöhter Temperatur, die im allgemeinen von dem Vernetzer abhängig ist, gehärtet werden.

Die erfindungsgemäßen Pigmentzubereitungen zeichnen sich durch ihre geringen Lösungsmittelgehalte aus und können sogar frei von organischen Lösungsmitteln sein. Die aus den Pigmentzubereitungen herstellbaren Überzüge vergilben nur geringfügig.

### Beispiele

Abkürzungen
- EEW: = Epoxidequivalentgewicht
- VE: = voll entsalzt

### Herstellung der erfindungsgemäßen Kunstharze K1 - K4 und der Vergleichskunstharze V3P und V3N

### Allgemeine Arbeitsvorschrift

Die Bestandteile des epoxidgruppentragenden Harzes (Komponente (A)) wurden entsprechend der angegebenen Mengen vorgelegt und auf 110°C solange erhitzt bis sich eine klare Lösung gebildet hatte. Anschließend wurde die entsprechende Menge Katalysator zugesetzt, wodurch die Reaktionstemperatur bis über 150°C anstieg. Nach dem Abklingen der exothermen Reaktion hielt man die Reaktionstemperatur etwa 90 Minuten bei 130°C, bis das gewünschte Epoxidequivalentgewicht erreicht war. Anschließend wurde entweder mit der angegebenen Menge des organischen Lösungsmittels verdünnt und auf 80°C abgekühlt oder sofort auf 80°C abgekühlt. Danach wurde innerhalb von 30 Minuten die angegebene Menge Sulfid, Tributylamin oder Dimethylethanolamin zugetropft. Bei der gleichen Temperatur wurde anschließend rasch die Säure oder ein Säure/Wassergemisch zugesetzt. Es wurde solange nachreagiert bis die Säurezahl der Mischung unter 1 gefallen war. Das entstandene Produkt wurde entweder sofort oder nach weiterer Wasserzugabe verarbeitet.

### Kunstharz K1

Vorlage:
3008 g Bisphenol A-diglycidylether EEW 188, M̅_{w} von ca. 400
826 g Diglycidylether eines Polyethylenglykols mit einem M̅_{w} von ca. 400, EEW 200
1140 g Bisphenol A
589.5 g Dodecylphenol
495 g Nonylphenol
Katalysator:
6.06 g Ethyltriphenylphosphoniumbromid
EEW gemessen: 1080
606 g 2-Butoxyethanol
342.3 g Thiodiethanol
758 g Milchsäure 60 %ig
Viskosität bei 75°C: 2600 mPas
Festgehalt: 89.3 %
Gehalt an organischen Lösemitteln: 7.8 %

### Kunstharz K2

Vorlage:
2369 g Bisphenol A-diglycidylether EEW 188, M̅_{w} von ca. 400
1115 g Diglycidylether eines Polypropylenglykols mit einem M̅_{w} von ca. 430, EEW 215
1140 g Bisphenol A
786 g Dodecylphenol
660 g Nonylphenol
Katalysator:
6.07 g Dimethylbenzylamin
EEW gemessen: 1360
912 g Diethylenglykol
325.8 g Dibutylsulfid
721 g Milchsäure 60 %ig
482 g Wasser
Viskosität bei 75°C: 3280 mPas
Festgehalt: 80.1 %
Gehalt an organischen Lösemitteln: 11.3 %

### Kunstharz K3

Vorlage:
4061 g Bisphenol A-diglycidylether EEW 188, M̅_{w} von ca. 400
496 g Diglycidylether eines Polybutylenglykols mit einem M̅_{w} von ca. 430, EEW 215
1140 g Bisphenol A
393 g Dodecylphenol
330 g Octylphenol
Katalysator:
6.42 g Triethylamin
EEW gemessen: 905
348 g 1,2-Dibutoxyethan
432.8 g Thiodiglykol
958 g Milchsäure 60 %ig
Viskosität bei 75°C: 1800 mPas
Festgehalt: 91.1 %
Gehalt an organischen Lösemitteln: 4.3 %

### Kunstharz K4

Vorlage:
1015.2 g Bisphenol A-diglycidylether EEW 188, M̅_{w} von ca. 400
123.9 g Diglycidylether eines Polyethylenglykols mit einem M̅_{w} von ca. 430, EEW 215
222.3 g Bisphenol A
99.2 g Nonylphenol
117.9 g Dodecylphenol
Katalysator:
1.58 g Ethyltriphenylphosphoniumbromid
EEW gemessen: 558
189.4 g Thiodiethanol
418.9 g Milchsäure 60 %ig
1178.6 g VE-Wasser
Viskosität bei 75°C: 1680 mPas
Festgehalt: 60.1 %
Gehalt an organischen Lösemitteln: 0 %

### Vergleichskunstharz V3P

Vorlage:
4061 g Bisphenol A-diclycidylether EEW 188, M̅_{w} von ca. 400
496 g Diglycidylether eines Polytetrahydrofurans mit einem M̅_{w} von ca. 400, EEW 215
1140 g Bisphenol A
393 g Dodecylphenol
330 g Octylphenol
Katalysator:
6.42 g Triethylamin
EEW gemessen: 910
348 g Butylglykol
755.6 g Tributylphosphin
958 g Milchsäure 60 %ig
Viskosität bei 75°C: > 4000 mPas
Harz wurde mit 710 g Butylglykol weiter verdünnt
Viskosität bei 75°C: 2200 mPas
Festgehalt: 84.3 %
Gehalt an organischen Lösemitteln: 11.5 %

### Vergleichskunstharz V3N

Vorlage:
4061 g Bisphenol A-polyclycidylether EEW 188, M̅_{w} von ca. 400
496 g Diglycidylether eines Polytetrafurans mit einem M̅_{w} von ca. 400, EEW 215
1140 g Bisphenol A
393 g Dodecylphenol
330 g Octylphenol
Katalysator:
6.42 g Triethylamin
EEW gemessen: 908
348 g Butylglykol
315.7 g Dimethylethanolamin
958 g Milchsäure 60 %ig
Viskosität bei 75°C: > 4000 mPas
Harz wurde mit 1250 g Butylglykol weiter verdünnt
Viskostitä bei 75°C: 2160 mPas
Festgehalt: 78.7 %
Gehalt an organischen Lösemitteln: 17.2 %

### Herstellung der Pigmentzubereitungen 1 - 6

### Allgemeine Arbeitsvorschrift

Das jeweilige Kunstharz wurde mit VE-Wasser auf einen Festgehalt von 30 bis 35 % verdünnt. Anschließend wurde die angegebene Menge der Pigmente zugesetzt. Die Mischung wurde in einer Rührwerkskugelmühle bis zu einer Hegman-Feinheit > 7 vermahlen.

Jedes Kunstharz wurde mit einer bleihaltigen und einer bleifreien Pigmentmischung formuliert wie der nachstehenden Tabelle I zu entnehmen ist.

Dabei ließen sich die Kunstharze K1 bis K4 und das Vergleichskunstharz V3N zu den entsprechenden Pigmentzubereitungen 1 bis 4 bzw. 5 verarbeiten. Das Vergleichskunstharz V3P koagulierte beim Vermahlen so stark, daß sich keine Pigmentzubereitungen herstellen ließen.

### Herstellung des Bindemittels

246 g Hexamethylendiamin, 307 g Dimerfettsäure, 59 g Leinölfettsäure und 31 g Toluol wurden auf 190°C erhitzt und das entstehende Reaktionswasser azeotrop abdestilliert. Anschließend wurde mit 73 g Toluol verdünnt und 4.1 g Hexamethylendiamin zugesetzt. Das so erhaltene Aminvorprodukt hatte eine Aminzahl von 249 mg KOH/g. In einem zweiten Rührgefäß wurden 3061 g Bisphenol A-diglycidylether (EEW ca. 485) in 569 g Toluol und 534 g Isobutanol gelöst. Bei 55°C wurden 135 g Methylethanolamin zugesetzt. Nachdem ein EEW von 835 erreicht war, wurden 656 g des Aminvorproduktes und 141 g Toluol zugegeben. Anschließend wurde 2 Stunden nachreagiert. Das so erhaltene Bindemittel hatte einen Festgehalt von 70 % und eine Aminzahl von 91 mg KOH/g.

### Herstellung des Vernetzers

504 g trimerisiertes Hexamethylendiisocyanat wurden in 382 g Methylisobutylketon gelöst. Unter Kühlen tropfte man bei 70°C 388 g Dibutylamin zu. Es wurde so lange nachgerührt bis der Isocyanatwert auf etwa Null gesunken war. Der so erhaltene Vernetzer hatte einen Festgehalt von etwa 70 %.

### Herstellung der Bindemittel-Vernetzer-Dispersion

695 g Bindemittel, 298 g Vernetzer und 16 g Eisessig wurden homogenisiert und anschließend langsam mit VE-Wasser versetzt. Anschließend wurden die in der Bindemittel- und Vernetzerkomponente enthaltenen organischen Lösungsmittel weitgehend im Vakuum bei 40 - 50 % abdestilliert. Durch Zugabe von VE-Wasser wurde ein Festgehalt von 35 % eingestellt.

### Herstellung der Elektrotauchlackierbäder E1 - E5

Zu 1964 g der Bindemittel-Vernetzer-Dispersion wurden 568 g einer der obengenannten Pigmentzubereitungen zugegeben und solange gerührt bis die Mischung homogen war. Anschließend wurde abfiltriert und mit VE-Wasser auf 5000 g aufgefüllt. Der Festgehalt der Bäder lag bei etwa 20 %. Die Beschichtung der Bleche für die anwendungstechnischen Prüfungen wurden vorgenommen, nachdem die Bäder 7 Tage bei Raumtemperatur gerührt worden waren.

**Tabelle 1**

| Pigmentzubereitung Nr. | Kunstharz* | | Pigmente [g] | | | | |
|---|---|---|---|---|---|---|---|
| | Nr. | [g] | Titandioxid | Bleisilikat | Kreide | Perlruß | Wasser [g] |
| erfindungsgemäß | | | | | | | |
| 1a | K1 | 65.3 | 195.0 | - | 48.1 | 5.5 | 251.0 |
| 1b | K1 | 65.3 | 220.0 | 23.1 | - | 5.5 | 251.0 |
| 2a | K2 | 72.6 | 195.0 | - | 48.1 | 5.5 | 236.5 |
| 2b | K2 | 72.6 | 220.0 | 23.1 | - | 5.5 | 236.5 |
| 3a | K3 | 63.9 | 195.0 | - | 48.1 | 5.5 | 245.2 |
| 3b | K3 | 63.9 | 220.0 | 23.1 | - | 5.5 | 245.2 |
| 4a | K4 | 96.8 | 195.0 | - | 48.1 | 5.5 | 212.3 |
| 4b | K4 | 96.8 | 220.0 | 23.1 | - | 5.5 | 212.3 |

| zum Vergleich zu den Pigmentzubereitungen 3a und 3b | | | | | | | |
|---|---|---|---|---|---|---|---|
| 5a | V3N | 74.0 | 195.0 | - | 48.1 | 5.5 | 242.3 |
| 5b | V3N | 74.0 | 220.0 | 23.1 | - | 5.5 | 242.3 |

| | | | | | | | |
|---|---|---|---|---|---|---|---|
| * Der Kunstharzanteil in den Pigmentzubereitungen betrug jeweils 58.15 g fest. | | | | | | | |

### Anwendungstechnische Prüfungen

Bei einer Spannung von 220 bis 350 V und einer Temperatur von 27°C wurden aus den Elektrotauchlackierbädern an zinkphosphatierten Stahlblechen der Größe 190 x 105 mm innerhalb von 2 Minuten Überzüge abgeschieden. Anschließend wurden die Probekörper gründlich mit VE-Wasser gespült und die Überzüge bei einer Temperatur von 165°C innerhalb von 20 Minuten ausgehärtet. Die Schichtdicke der Überzüge betrug zwischen 16 und 26 »m. Die Ergebnisse der anwendungstechnischen Prüfungen an den beschichteten Blechen ist der Tabelle 2 zu entnehmen.

**Tabelle 2**

| Elektrotauchlackier-Dispersion Nr. | Pigmentzubereitung Nr. | U [V] | Verlauf | SD [»m] | KWT UR/F/K [mm] | Vergilbung |
|---|---|---|---|---|---|---|
| erfindungsgemäß | | | | | | |
| E1a | 1a | 310 | 3 | 20 | 2.1/1/5 | 2 |
| E1b | 1b | 330 | 2 | 22 | 1.4/0/2 | 2 |
| E2a | 2a | 280 | 2 | 23 | 2.0/1/4 | 2 |
| E2b | 2b | 300 | 1 | 25 | 1.3/0/1 | 1 |
| E3a | 3a | 330 | 2 | 24 | 1.8/0/3 | 1 |
| E3b | 3b | 350 | 1 | 25 | 1.1/0/2 | 1 |
| E4a | 4a | 310 | 2 | 22 | 2.0/0/3 | 1 |
| E4b | 4b | 340 | 2 | 23 | 1.3/0/2 | 1 |

| zum Vergleich zu E3a und E3b | | | | | | |
|---|---|---|---|---|---|---|
| E5a¹⁾ | V3N | 350 | 5 | - | - | 4 |
| E5b²⁾ | V3N | - | - | - | - | - |
| U: Abscheidespannung, gemessen in [V] Verlauf: Verlaufsgrade 1 (sehr gut) - 5 (mangelhaft) SD: Schichtdicke, gemessen in [»m] KWT: 10 Zyklen Klimawechseltest nach VDA 621-415 UR: Unterwanderung am Ritz nach DIN 50 021, gemessen in [mm] F: Flächenrostgrad 0 (kein Rost) - 5 (stark verrostet) K: Kantenrostgrad 0 (kein Rost) - 5 (stark verrostet) Verbilbung: Vergilbungsgrad 0 (keine Vergilbung) - 5 (starke Vergilbung) Um den Grad der Vergilbung zu bestimmen, wurden auf beschichteten Blechen je ein PVC-Streifen gleicher Größe angebracht. Die so präparierten Bleche wurden mit weißem Decklack gespritzt, der anschließend ausgehärtet wurde. Die Probebleche wurden 8 Tage bei 70°C verdampfendem Wasser ausgesetzt, wobei im Bereich des PVC-Streifens Vergilbungen auftreten können. | | | | | | |

| | | | | | | |
|---|---|---|---|---|---|---|
| ¹⁾ Aus dieser Elektrotauchlackier-Dispersion ließ sich nur ein sehr dünner Film abscheiden, der stark vergilbte. | | | | | | |
| ²⁾ Da diese Elektrotauchlackier-Dispersion im Bad koagulierte war überhaupt keine Filmabscheidung möglich. | | | | | | |

## Patentansprüche

1. Pigmentzubereitungen, enthaltend als wesentliche Komponenten
I) ein Kunstharz erhältlich durch Umsetzen von
A) 60 bis 95 Gew.% eines epoxidgruppentragenden Harzes auf Basis von
a₁) 10 bis 70 Gew.% eines Polyepoxides auf der Basis mehrwertiger Phenole mit einem Epoxidäquivalentgewicht von 175 bis 1000
a₂) 5 bis 50 Gew.% eines
Polyoxyalkylenpolyols mit einem mittleren Molekulargewicht M_{w} zwischen 200 und 20 000 und einem
Hydroxidäquivalentgewicht von 150 bis 5000 oder eines
Polyoxyalkylenpolyepoxides mit einem mittleren Molekulargewicht M_{w} zwischen 200 und 20 000 und einem
Epoxidäquivalentgewicht von 150 bis 5000 oder einer Mischung aus diesen Verbindungen
a₃) 10 bis 50 Gew.% eines mehrwertigen Phenoles
a4) 0,5 bis 30 Gew.% einer Mischung aus zwei oder mehreren Monoalkylphenolen, die sich in ihrer Alkylkettenlänge um mindestens 3 Kohlenstoffatome unterscheiden
mit
B) 5 bis 40 Gew.% eines aliphatischen, aliphatisch-aromatischen, aromatischen oder cyclischen Sulfids oder einer Mischung aus diesen Sulfiden
in Anwesenheit von Säuren und
II) ein Pigmentpulver.

2. Pigmentzubereitungen nach Anspruch 1, dadurch gekennzeichnet, daß a₁) ein Polyepoxid auf Basis von Bisphenol A und a₃) Bisphenol A ist.

3. Pigmentzubereitungen nach Anspruch 1 oder 2, dadurch gekennzeichnet, daß a₄) eine Mischung aus Nonylphenol und Dodecylphenol ist.

4. Verwendung der Pigmentzubereitungen gemäß den Ansprüchen 1 bis 3 in Elektrotauchlackbädern.

## Claims

1. Pigment formulations containing, as essential components,
I) a synthetic resin obtainable by reacting
A) from 60 to 95 % by weight of an epoxide-carrying resin based on
a₁) from 10 to 70 % by weight of a polyepoxide based on polyhydric phenols having an epoxide equivalent weight of from 175 to 1,000,
a₂) from 5 to 50 % by weight of a polyoxyalkylenepolyol having an average molecular weight M_{w} of from 200 to 20,000 and a hydroxide equivalent weight of from 150 to 5,000 or of a polyoxyalkylenepolyepoxide having an average molecular weight M_{w} of from 200 to 20,000 and an epoxide equivalent weight of from 150 to 5,000 or of a mixture of these compounds,
a₃) from 10 to 50 % by weight of a polyhydric phenol and
a₄) from 0.5 to 30 % by weight of a mixture of two or more monoalkylphenols which differ in their alkyl chain length by at least 3 carbon atoms
with
B) from 5 to 40 % by weight of an aliphatic, aliphatic-aromatic, aromatic or cyclic sulphide or of a mixture of these sulphides
in the presence of acids and
II) a pigment powder.

2. Pigment formulations according to Claim 1, characterized in that a₁) is a polyepoxide based on bisphenol A and a₃) is bisphenol A.

3. Pigment formulations according to Claim 1 or 2, characterized in that a₄) is a mixture of nonylphenol and dodecylphenol.

4. Use of the pigment formulations according to Claims 1 and 3 in electrocoating baths.

## Revendications

1. Préparations pigmentaires, contenant en tant que composants essentiels
I) une résine synthétique que l'on peut obtenir par réaction
A) de 60 à 95 % en poids d'une résine portant des groupements époxydes à base
a₁) de 10 à 70 % en poids d'un polyépoxyde à base de phénols polyvalents ayant un poids équivalent en époxyde de 175 à 1 000,
a₂) de 5 à 50 % en poids d'un polyoxyalkylènepolyol ayant un poids moléculaire moyen M_{w} compris entre 200 et 20 000 et un poids équivalent en hydroxyde de 150 à 5 000 ou
d'un polyoxyalkylènepolyépoxyde ayant un poids moléculaire moyen M_{w} compris entre 200 et 20 000 et un poids équivalent en époxyde de 150 à 5 000 ou d'un mélange de ces composés
a₃) de 10 à 50 % en poids d'un phénol polyvalent
a₄) de 0,5 à 30 % en poids d'un mélange de deux ou plusieurs phénols monoalkyles, qui se différentient pour ce qui est de leur longueur de chaîne alkyle par au moins 3 atomes de carbone
avec
B) de 5 à 40 % en poids d'un sulfide aliphatique, aliphatique-aromatique, aromatique ou cyclique ou d'un mélange de ces sulfides
en présence d'acides et
II) une poudre pigmentaire.

2. Préparations pigmentaires selon la revendication 1, caractérisées en ce que a₁) est un polyépoxyde à base de bisphénol A et en ce que a₃) est le bisphénol A.

3. Préparations pigmentaires selon la revendication 1 ou 2, caractérisées en ce que a₄) est un mélange de nonylphénol et de dodécylphénol.

4. Utilisation des préparations pigmentaires conformément aux revendications 1 à 3 dans des bains de vernis pour trempage électrophorétique.
